# EUROPÄISCHE PATENTANMELDUNG

(11) **EP 2 436 260 A1**
(43) Veröffentlichungstag der Anmeldung: **04.04.2012**
(21) Anmeldenummer: 11001676.3
(22) Anmeldetag: 01.03.2011
(51) Int. Cl.: A01D 78/10

(54) **Heuwerbungsmaschine zum Wenden von am Boden liegendem Erntegut**

(30) Priorität: 01.10.2010 DE 102010047067
(71) Anmelder: CLAAS Saulgau GmbH, 88348 Bad Saulgau (DE)
(72) Erfinder: Schmid, Christian, 88696 Billafingen (DE)

(57) **Zusammenfassung**

Heuwerbungsmaschine zum Wenden von am Boden liegendem stängeligem Erntegut mit wenigstens zwei in einem Maschinengestell quer zur Fahrtrichtung nebeneinander gelagerten und gegenläufig zueinander umlaufend um Hochachsen antreibbaren Rechkreiseln mit wenigstens einem bodenkopierenden Tast- und Stützrad, wobei das Maschinengestell ein zusätzliches Fahrwerk aufweist, welches wahlweise in oder außer Eingriff mit dem Boden bringbar ist und wobei das Maschinengestell mit einer Zugdeichsel und einer Anschlussvorrichtung zur Ankoppelung an ein Zugfahrzeug ausgestattet ist, wobei Zugdeichsel (4) und Maschinengestell (2) gemeinsam eine Knickdeichsel mit einem Kniegelenk (12) bilden, wobei das Kniegelenk mit einer im Wesentlichen horizontal und quer zur Fahrtrichtung verlaufenden Gelenkachse ausgebildet ist und das Kniegelenk (12) von einem Stellmittel (9) überbrückt ist, wobei den Rechkreiseln (3) ein verschwenkbares Fahrwerk (8) mit wenigstens einem Stützrad (6) derart vorgelagert ist, dass dieses in der Arbeitstellung bodenfern und in der Vorgewende- und Transportstellung mit dem Erdboden in Eingriff steht.

## Beschreibung

### Beschreibung

Die Erfindung betrifft eine Heuwerbungsmaschine zum Wenden von am Boden liegendem Erntegut nach dem Oberbegriff des Anspruches 1.

### Stand der Technik

Bekannt sind Heuwerbungsmaschinen zum Wenden von am Boden liegendem stängeligem Erntegut mit mehreren in einem Maschinengestell quer zur Fahrtrichtung nebeneinander angeordneten und in diesem gelagerten und gegenläufig zueinander umlaufend um Hochachsen antreibbaren Rechkreiseln. Derartige Heuwerbungsmaschinen sind auch unter dem Begriff Kreiselzetter in der Sicherheitsnorm DN EN ISO 4254-10 beschrieben. Die Anzahl der Rechkreisel bestimmt die Arbeitsbreite die zwischenzeitlich die 10 m Marke weit überschritten hat. In der Transportstellung für den Straßentransport müssen diese Maschinen in ein Straßentransportprofil überführt werden, welches die Breite von 3 m und die Höhe von 4 m nicht wesentlich übersteigt.

Diese Heuwerbungsmaschinen werden an ein Zugfahrzeug und dessen Zapfwelle angeschlossen und angetrieben. Stellantriebe werden an die Bordhydraulik des Zugfahrzeuges angekuppelt und können somit aus dem Inneren der Fahrerkabine mit den üblichen Stellelementen angesteuert und somit betätigt werden.

Große Arbeitsbreiten für derartige Heuwerbungsmaschinen beinhalten immer aufwändige Klappmechanismen und separate Transportfahrwerke mit entsprechenden Bauräumen. In der Vorgewendestellung am Feldrand ist es zudem wünschenswert mit geringem steuerungstechnischen Aufwand eine sogenannte Vorgewendestellung herbeiführen zu können, so dass die Rechzinken vom Boden abgehoben werden und somit nicht in Eingriff mit dem am Boden liegendem Erntegut stehen.

### Aufgabenstellung

Hier setzt die Aufgabe der Erfindung an mit dem Ziel, eine Heuwerbungsmaschine der beschriebenen Art mit verbesserten Eigenschaften bezüglich ihrer Anpassung an unterschiedliche Betriebsbedingungen sowohl im Feldbetrieb als auch in der Transportfahrt vorzuschlagen.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die erfindungsgemäße Heuwerbungsmaschine zum Wenden von am Boden liegendem stängeligem Erntegut verfügt über wenigstens zwei in einem Maschinengestell quer zur Fahrtrichtung nebeneinander gelagerten und gegenläufig zueinander umlaufend um Hochachsen antreibbaren Rechkreiseln mit einem bodenkopierenden Tast- und Stützrad unterhalb des Rechkreisels, wobei das Maschinengestell in einem Kniegelenk mit einer Zugdeichsel gelenkig verbunden ist und beide gemeinsam ein zusätzliches Fahrwerk aufweisen, welches den Rechkreiseln in Fahrtrichtung gesehen vorgeordnet ist. In besonders vorteilhafter Weise ist die Gelenkachse der Fahrwerksschwinge identisch mit der Gelenkachse des Kniegelenks, welches Maschinenrahmen und Zugdeichsel miteinander verbindet, weil somit die Rechkreisel in der Transportstellung oberhalb der Transporträder liegen wodurch die Deichsel eine Gewichtsentlastung erfährt und sich dadurch gute und stabile Fahreigenschaften für die gezogene Heuwerbungsmaschine ergeben. Zudem ergibt sich hierdurch eine sehr kompakte und kurze Bauweise der Heuwerbungsmaschinen, sowohl in der Arbeits- als auch in der Transportstellung.

Die Zugdeichsel wiederum ist frontseitig um eine Hochachse verschwenkbar mit einer Anschlussvorrichtung verbunden, welche zur Ankoppelung an ein Zugfahrzeug vorgesehen ist.

Erfindungsgemäß bilden Maschinengestell und Zugdeichsel in ihrer Längserstreckung gemeinsam eine Knickdeichsel mit dem Kniegelenk, wobei das Kniegelenk mit einer im Wesentlichen horizontal und quer zur Fahrtrichtung verlaufender Gelenkachse ausgebildet ist. Das vor den Rechkreiseln liegende Fahrwerk, bestehend aus mindestens zwei nebeneinander liegenden und beabstandeten Stützrädern, die an einer Schwinge befestigt und gelagert sind, erfüllt eine Mehrfachfunktion. Diese Mehrfachfunktion besteht darin, dass dieses Fahrwerk als Transportfahrwerk für den Straßentransport und für den Aushebevorgang im Vorgewende ausgelegt ist.

Das Kniegelenk der Zugdeichsel ist von einem Stellmittel, ausgebildet als KolbenZylindereinheit, vorzugsweise einem Hydraulikzylinder, nachfolgend als Streuwinkelverstellzylinder bezeichnet, überbrückt. Mit diesem Stellmittel wird die Neigung der Kreiselachsen und damit der Streuwinkel und auch der Abstand der Zinkenspitzen gegenüber dem Boden eingestellt. Ist diese Einstellung erfolgt braucht dieses Stellmittel im weiteren Verlauf der Feldarbeit nicht und ebenfalls auch nicht für das Ausheben in die Vorgewendestellung betätigt werden.

Das Ausheben in die Vorgewendestellung übernimmt ein zweiter Hydraulikzylinder, welcher die Fahrwerksschwinge betätigen und arretieren kann. Die Fahrwerksschwinge ist vorzugsweise als Doppelschwinge ausgebildet, welches aber keineswegs eine zwingende Notwendigkeit für die Umsetzung der Erfindung ist.

Dieser Hydraulikzylinder erfüllt ebenfalls Mehrfachfunktionen, nämlich die als Stell-und Arretierungsmittel und die als vorgespanntes Bedämpfungselement in Verbindung mit einem Druckspeicher.

In der Transportstellung des Fahrwerks ist der Hydraulikzylinder mit dem Druck des Gasdruckspeichers druckbeaufschlagt, so dass die Stützräder des Fahrwerks sich gegenüber dem Boden nachgiebig und stossdämpfend abstützen können. Dabei ist die geometrische Auslegung des Fahrwerks durch die Stellung der Fahrwerksschwinge in der Transportposition so gewählt, dass die Stoßdämpfung nur in der Transportstellung wirksam ist. Dieses basiert darauf, dass die dynamischen Stosskräfte nur in dieser Stellung einen Hebelarm um die Gelenkachse des Kniegelenks vorfinden, so dass die Stoßkräfte sich über den Doppelhebel auf den Fahrwerkszylinder und damit auf den Druckspeicher elastisch abstützen können.

Für die Umstellung der Heuwerbungsmaschine von der Arbeits- in die Transportstellung werden beide Stellmittel angesteuert und betätigt. Dabei wird durch Betätigung des Fahrwerkzylinders die Fahrwerksschwinge im ersten Schritt das komplette Fahrwerk in die Transportstellung verschwenkt und danach wird im zweiten Schritt durch Betätigung des Streuwinkelverstellzylinders das Maschinengestell einschließlich der Rechkreisel in die Transportstellung verschwenkt. Beide Verschwenkvorgänge vollziehen sich um die Gelenkachse des Kniegelenks der Knickdeichsel bestehend aus Zugdeichsel und Maschinengestell.

Das Zusammenwirken beider Stellmittel, nämlich der des Fahrwerks und der der Rechkreiselstreuwinkelverstellung, ermöglicht eine besonders einfache und kompakte Überführung der Heuwerbungsmaschine in Ihre Transportstellung, wobei die Rechkreisel nunmehr oberhalb der Stützräder des Fahrwerks liegen, welches sich günstig auf das Nachlauf- und Spurverhalten in der Transportfahrt auswirkt.

In einer weiteren Ausgestaltung der Erfindung umfasst das Stellmittel Fahrwerkzylinder ein Wegmesssystem welches Teil einer Steuereinheit darstellt und welches dazu dient, die Bewegungsabläufe von der Umstellung in die Vorgewende- oder Transportstellung zu automatisieren. Dieses erleichtert dem Fahrer die Beobachtung des Umfeldes ohne dass er dabei sich auf den Ablauf des Steuervorgangs konzentrieren muss.

Die Fernverstellung der Streuwinkeleinstellung ist zudem ein Beitrag zur Verbesserung der Arbeitssicherheit für den Fahrer, da er sich nicht in den Gefährdungsbereich der Heuwerbungsmaschinen außerhalb der Fahrerkabine hineinbegeben muss.

### Ausführungsbeispiel

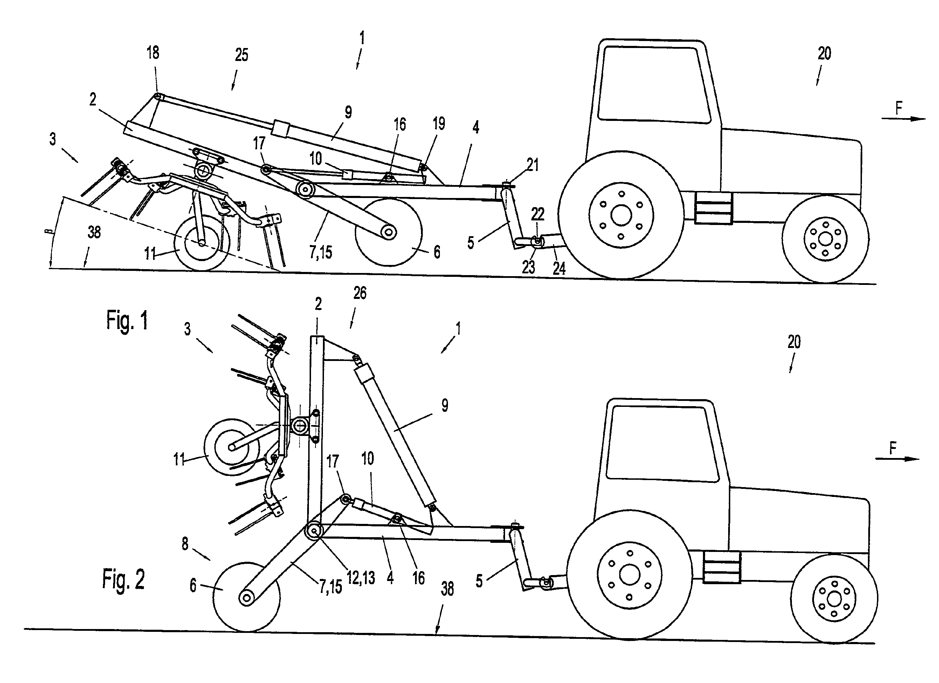

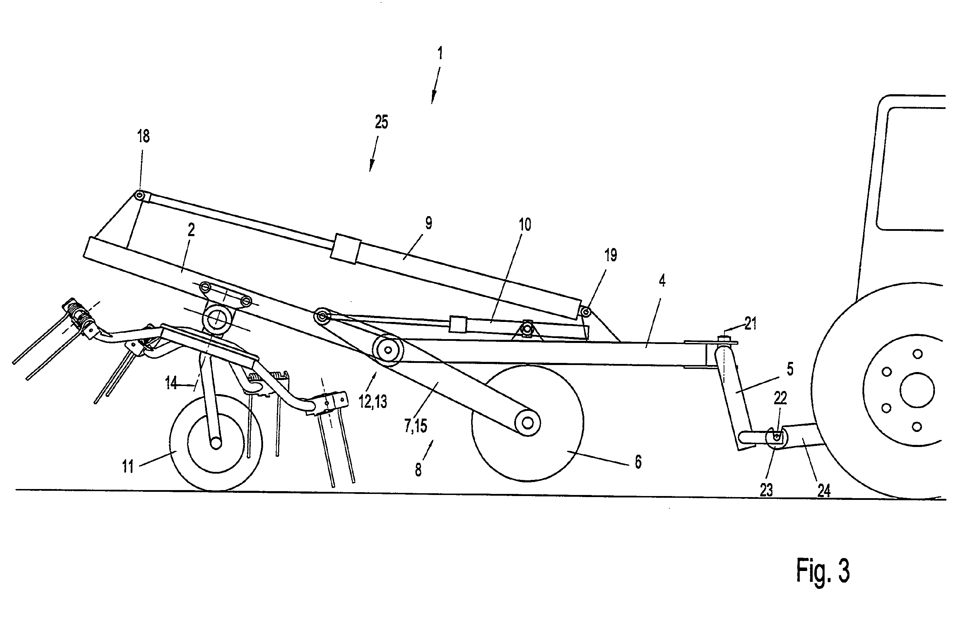

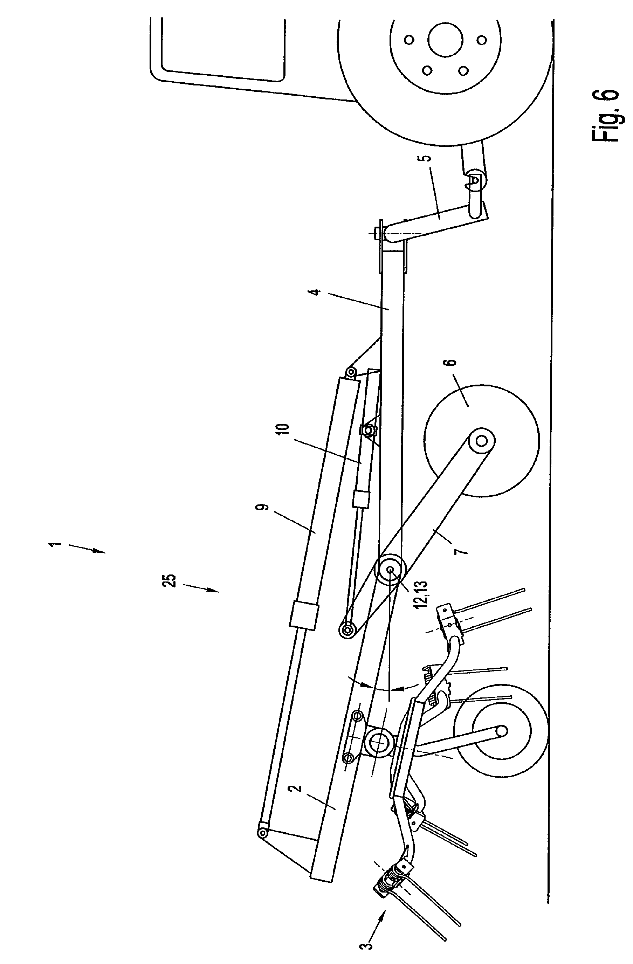

Ein Ausführungsbeispiel der Erfindung ist anhand der nachfolgenden Figurendarstellungen Fig.1 bis Fig.7 dargestellt und wird nachfolgend näher erläutert.
Fig.1 zeigt eine Seitenansicht einer Heuwerbungsmaschine nach der Erfindung, ausgeführt als Kreiselzetter und als angehängtes Gerät an einem Zugfahrzeug in Arbeitsstellung und Fig.2 zeigt die gleiche Ansicht in der zusammengeklappten Transportstellung.
Fig.3 zeigt die Arbeitsstellung gemäß Fig.1 in vergrößerter Darstellung, Fig. 4 eine Vorgewendestellung mit vom Boden abgehobenen Rechkreiseln und Fig. 5 die Transportstellung gemäß Fig.2 in vergrößerter Darstellung.
Fig. 6 zeigt eine weitere Arbeitsstellung analog Fig. 3 jedoch mit einer anderen Achsneigung des Rechkreisels und damit mit einem anderen Zinkenabstand gegenüber dem Boden.

Die Heuwerbungsmaschine 1 ist als angehängtes Gerät an ein Zugfahrzeug 20 bzw. einem Traktor dargestellt. Sie besteht im Wesentlichen aus den Rechkreiseln 3 mit den Tast- und Stützrädern 11, einem Maschinengestell 2, einer Zugdeichsel 4, einer Anschlussvorrichtung 5 und einem Fahrwerk 8 mit zwei beabstandeten Stützrädern 6. Heuwerbungsmaschinen dieser Art weisen je nach Arbeitsbreite eine Vielzahl von nebeneinander liegenden Rechkreiseln 3 auf, wobei die Anzahl der Rechkreisel in diesem Zusammenhang von untergeordneter Bedeutung ist. An dem Maschinengestell 2 sind die Rechkreisel 3 starr befestigt und in an sich bekannter Weise um Hochachsen 14 von Winkelgetrieben umlaufend angetrieben und in Getriebegehäusen gelagert. Die Anschlussvorrichtung 5 ist in einem Gelenk 21, schwenkbar um eine Hochachse, mit der Zugdeichsel 4 verbunden und sie wird traktorseitig mit ihren Unterlenkerzapfen 22 von den Greifklauen 23 der Unterlenker 24 des Hubwerks des Zugfahrzeugs 20 aufgenommen. Es handelt sich somit um eine angehängte und aufgesattelte Heuwerbungsmaschine 1.

Das Maschinengestell 2 und die Zugdeichsel 4 sind in einem Kniegelenk 12 verschwenkbar miteinander verbunden. Das Kniegelenk 12 ist von einem Stellmittel, ausgebildet als Hydraulikzylinder 9, überbrückt, welcher in den Gelenkpunkten 18 und 19 zum einen an dem Maschinengestell 2 und zum anderen an der Zugdeichsel 4 angeschlagen ist.

Die Stützräder 6 sind an Fahrwerksschwingen 7 gelagert, die zugleich als Doppelhebel 15 ausgebildet sind. Am oberen freien Ende des Doppelhebels 15 greift im Gelenkpunkt 17 ein Stellmittel 10, ausgebildet als Hydraulikzylinder an, der sich in dem Gelenkpunkt 16 an der Zugdeichsel 4 abstützt. Das Stellmittel 10 liegt oberhalb der Zugdeichsel 4.

Die Kreiselachsen 14 der Rechkreisel 3 sind in der Arbeitsteilung in Fahrtrichtung F nach vorn geneigt, so dass sich ein Streuwinkel β gegenüber der Aufstandsfläche bzw. dem Boden 38 einstellt.

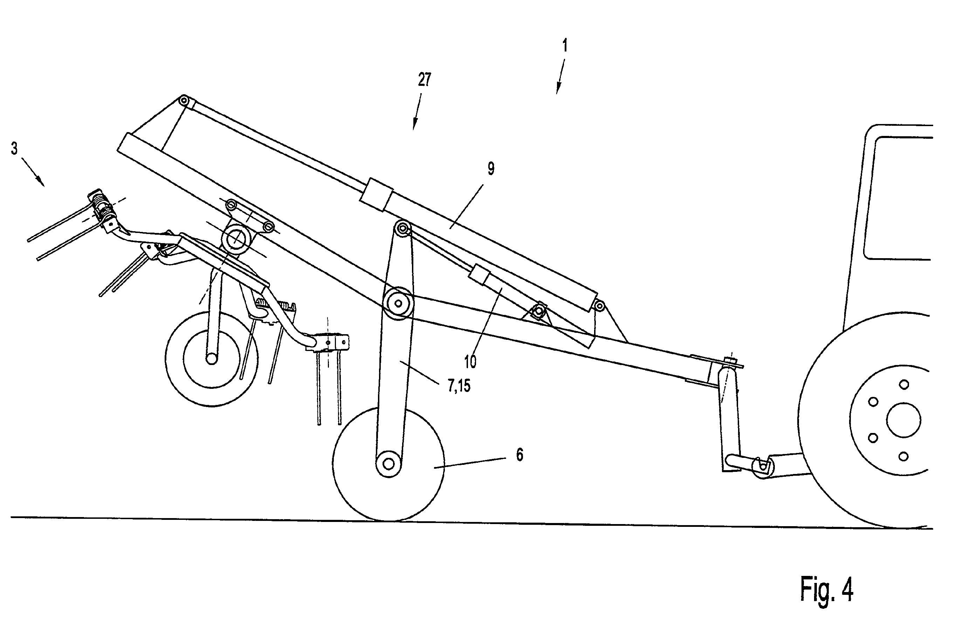

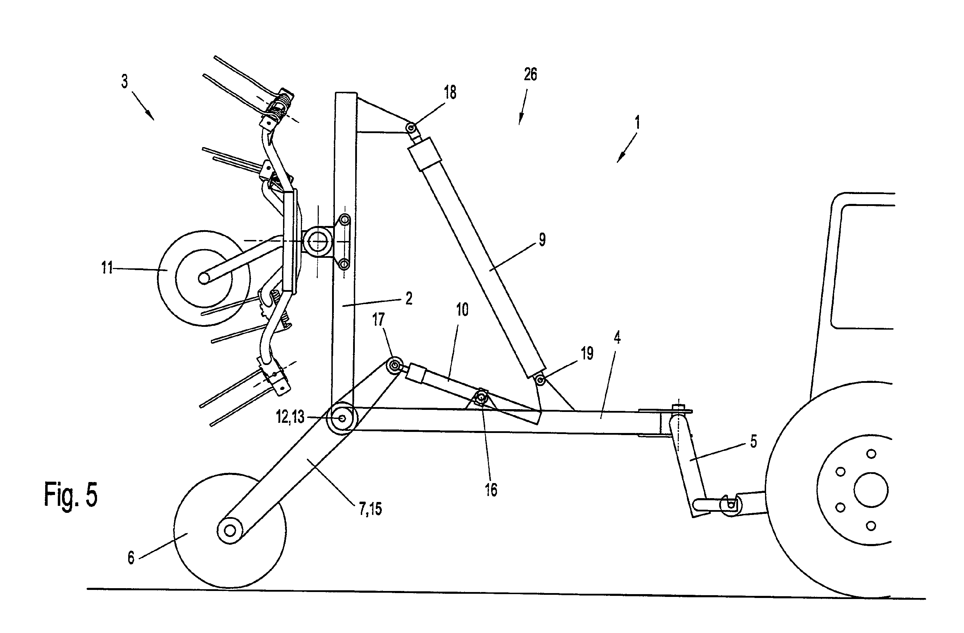

Die Figuren Fig.4 und Fig.5 zeigen, dass die Rechkreisel 3 in der Vorgewendestellung entgegen der Fahrtrichtung F hinter dem Fahrwerk 8 und in der Transportstellung oberhalb des Fahrwerks 8 liegen.

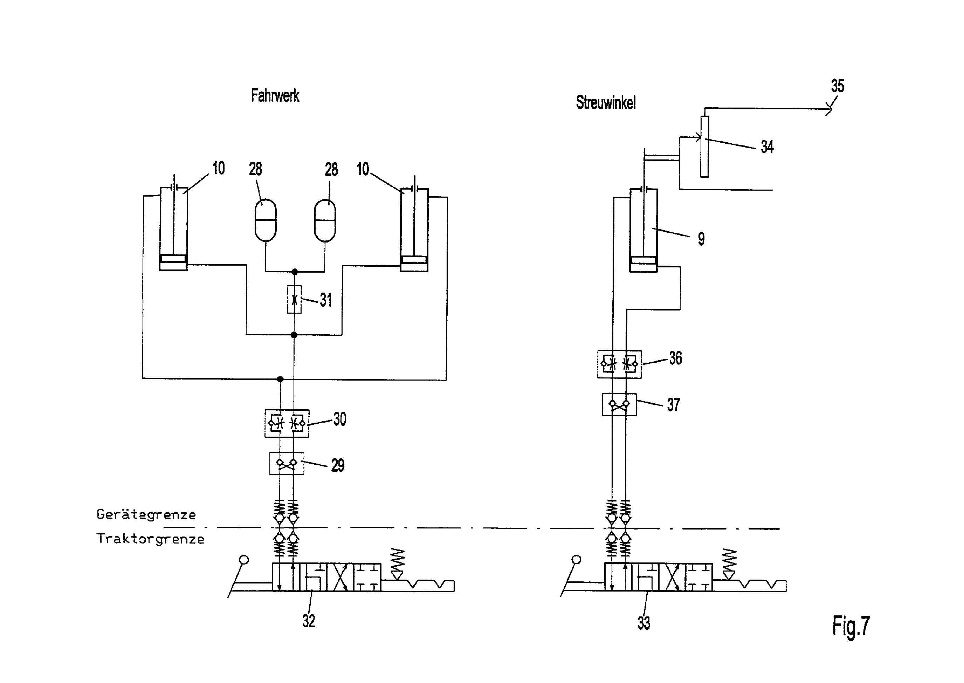

Fig.7 zeigt ein Ausführungsbeispiel für einen hydraulischen Schaltplan nach der Erfindung. Mit dem Wegeventil 32 des Zugfahrzeuges kann das Fahrwerk 8 in seine unterschiedlichen Stellungen, die Arbeits- Transport- oder Vorgewendestellung überführt und gehalten werden.

Die Hydraulikzylinder 10 des Fahrwerks stützen sich auf der Kolbenbodenseite über die Drossel 31 an den vorgespannten hydropneumatischen Druckspeichern 28 ab. Mit dem Drosselrückschlagventil 30 kann die Geschwindigkeit der Bewegungen der Kolbenstange des Hydraulikzylinders 10 eingestellt werden. Mit dem entsperrbaren Zwillingsrückschlagventil 29 kann die Kolbenstange des Hydraulikzylinders 10 und damit das Fahrwerk in den unterschiedlichen Stellposition, der Arbeits- Transport- oder Vorgewendestellung, leckagefrei arretiert werden.

Mit dem Wegeventil 33 des Zugfahrzeuges kann der Streuwinkel β relativ zum Boden 38 in der Arbeitsstellung 25 eingestellt und arretiert werden.

Der Hydraulikzylinder 9 der Streuwinkelverstellung überbrückt das Kniegelenk 12 und dessen Kolbenstange ist im Betriebszustand d.h. in der Arbeitsstellung aber auch in der Transportstellung 26 und der Vorgewendestellung 27 durch das entsperrbare Zwillingsrückschlagventil 37 arretiert. Durch Ein- oder Ausfahren der Kolbenstange kann der Streuwinkel β verändert werden. Durch völliges Einfahren der Kolbenstange in das Zylindergehäuse können die Rechkreisel 3 um die Gelenkachse 13 des Kniegelenks in die Transportstellung verschwenkt werden. Die Bewegungsgeschwindigkeit der Kolbenstange kann durch das Drosselrückschlagventil 36 eingestellt werden.

In besonders vorteilhafter Weise ist der Hydraulikzylinder 9 der Streuwinkelverstellung mit einem Wegmesssystem 34 gekoppelt, der ein elektrisches Ausgangssignal 35 als Eingangsignal für beispielsweise einen µ-Prozessor liefert. Dieses Ausgangssignal und damit die Stellung der Kolbenstange des Hydraulikzylinder 9 bzw. der Streuwinkel β kann beispielsweise auf einem Terminal innerhalb der Fahrerkabine des Zugfahrzeugs 20 visualisiert werden, wodurch dem Fahrer der Streuwinkel β mitgeteilt wird. Somit ist der Fahrer in der Lage, den Streuwinkel β kontrollierbar, fernverstellbar aus der Fahrerkabine heraus zu verstellen.

### Bezugszeichenliste

- 1: Heuwerbungsmaschine
- 2: Maschinengestell
- 3: Rechkreisel
- 4: Zugdeichsel
- 5: Anschlussvorrichtung
- 6: Stützrad
- 7: Fahrwerksschwinge
- 8: Fahrwerk
- 9: Stellmittel, Hydraulikzylinder (Streuwinkelverstellzylinder)
- 10: Stellmittel (Fahrwerkzylinder)
- 11: Tast- und Stützrad
- 12: Kniegelenk
- 13: Gelenkachse
- 14: Hochachse, Kreiselachse
- 15: Doppelhebel
- 16: Gelenkpunkt
- 17: Gelenkpunkt
- 18: Gelenkpunkt
- 19: Gelenkpunkt
- 20: Zugfahrzeug
- 21: Gelenk
- 22: Unterlenkerzapfen
- 23: Greifklauen
- 24: Unterlenker
- 25: Arbeitsstellung
- 26: Transportstellung
- 27: Vorgewendestellung
- 28: hydropneumatischer Druckspeicher
- 29: entsperrbares Zwillingsrückschlagventil
- 30: Drosselrückschlagventil
- 31: Drossel
- 32: Wegeventil
- 33: Wegeventil
- 34: Wegmesssystem
- 35: Ausgangssignal
- 36: Drosselrückschlagventil
- 37: entsperrbares Zwillingsrückschlagventil
- 38: Boden
- F: Fahrtrichtung
- β: Streuwinkel

## Patentansprüche

1. Heuwerbungsmaschine zum Wenden von am Boden liegendem stängeligem Erntegut mit wenigstens zwei in einem Maschinengestell quer zur Fahrtrichtung nebeneinander gelagerten und gegenläufig zueinander umlaufend um Hochachsen antreibbaren Rechkreiseln mit wenigstens einem bodenkopierenden Tast- und Stützrad, wobei das Maschinengestell ein zusätzliches Fahrwerk aufweist, welches wahlweise in oder außer Eingriff mit dem Boden bringbar ist und wobei das Fahrwerk mit einer Zugdeichsel und einer Anschlussvorrichtung zur Ankoppelung an ein Zugfahrzeug ausgestattet ist, **dadurch gekennzeichnet, dass** Zugdeichsel 4 und Maschinengestell 2 gemeinsam eine Knickdeichsel mit einem Kniegelenk 12 bilden, wobei das Knickgelenk mit einer im Wesentlichen horizontal und quer zur Fahrtrichtung verlaufenden Gelenkachse ausgebildet ist und das Kniegelenk 12 von einem Stellmittel 9 überbrückt ist, wobei den Rechkreiseln 3 ein verschwenkbares Fahrwerk 8 mit wenigstens einem Stützrad 6 derart vorgelagert ist, dass dieses in der Arbeitstellung bodenfern und in der Vorgewende- und Transportstellung mit dem Erdboden in Eingriff steht.

2. Heuwerbungsmaschine nach Anspruch 1, **dadurch gekennzeichnet, dass** das Kniegelenk 12 über ein Stellmittel 9 wahlweise freibeweglich oder festgestellt werden kann.

3. Heuwerbungsmaschine nach Anspruch 1 und 2, **dadurch gekennzeichnet, dass** das Stellmittel 9 ein Hydraulikzylinder ist.

4. Heuwerbungsmaschine nach Anspruch 3, **dadurch gekennzeichnet, dass** das Stellmittel zwei Funktionen umfasst, zum einen die Festlegung des Streuwinkels β und zum anderen die Stellbewegung zur Umstellung von der Arbeitsstellung in die Transportstellung und umgekehrt.

5. Heuwerbungsmaschine nach Anspruch 1 und 2, **dadurch gekennzeichnet, dass** das Stellmittel 9 wenigstens ein Wegmesssystem 34 aufweist.

6. Heuwerbungsmaschine nach Anspruch 1, **dadurch gekennzeichnet, dass** das Fahrwerk 8 eine Fahrwerksschwinge 7 und wenigstens ein Stellmittel 10, ausgebildet als Hydraulikzylinder, umfasst.

7. Heuwerbungsmaschine nach Anspruch 6, **dadurch gekennzeichnet, dass** das Fahrwerk 8 wenigstens einen vorgespannten hydropneumatischen Druckspeicher 28 umfasst.

8. Heuwerbungsmaschine nach Anspruch 6, **dadurch gekennzeichnet, dass** die Rechkreisel 3 in der Vorgewendestellung entgegen der Fahrtrichtung F hinter dem Fahrwerk 8 und in der Transportstellung oberhalb des Fahrwerks 8 liegen.

9. Heuwerbungsmaschine nach Anspruch 6, **dadurch gekennzeichnet, dass** die Fahrwerksschwinge 7 als Doppelhebel 15 ausgebildet ist.

10. Heuwerbungsmaschine nach Anspruch 6, **dadurch gekennzeichnet, dass** das Stellmittel 10 oberhalb der Zugdeichsel 4 liegt.

11. Heuwerbungsmaschine nach Anspruch 1 und 6, **dadurch gekennzeichnet, dass** die Schwenkachsen 13 für das Kniegelenk 12 und die Fahrwerksschwinge 7 identisch sind.
